# EUROPEAN PATENT SPECIFICATION

(11) **EP 2 175 743 B1**
(45) Date of publication and mention of the grant of the patent: **19.11.2014**
(21) Application number: 08776154.0
(22) Date of filing: 07.08.2008
(51) Int. Cl.: A23L 1/48, C12G 3/06, A23L 1/00, A23L 1/035

(54) **FOOD AND BEVERAGE FOAMS**
LEBENSMITTEL- UND GETRÄNKESCHÄUME
MOUSSES POUR ALIMENTS ET BOISSONS

(30) Priority: 07.08.2007 GB 0715348; 11.08.2007 GB 0715720; 15.09.2007 GB 0718041; 07.11.2007 GB 0721776; 08.12.2007 GB 0724017; 24.12.2007 GB 0725208; 04.03.2008 GB 0803978; 20.03.2008 GB 0805179; 29.03.2008 GB 0805707; 12.04.2008 GB 0806680; 19.04.2008 GB 0807191; 23.05.2008 GB 0809394
(43) Date of publication of application: 21.04.2010
(73) Proprietor: Libaeration Limited, Butterwick, Boston PE22 0JE (GB)
(72) Inventor: HAWKINS, John, South Staffordshire DY7 6JF (GB); STANILAND, Tim, Lincolnshire PE22 OJE (GB)
(74) Representative: Foster, Simon
(86) International application number: PCT/GB2008/002690
(87) International publication number: WO 2009/019486

(56) References cited:
- EP-A- 0 390 217
- EP-A- 1 252 828
- EP-A1- 2 087 796
- WO-A-94/12063
- WO-A-2008/068890
- GB-A- 760 765
- US-A- 5 658 609
- US-A- 6 033 711
- US-A1- 2002 061 353
- US-A1- 2007 065 555
- DATABASE WPI Week 200755 Thomson Scientific, London, GB; AN 2007-565293 XP002505395 & JP 2007 181427 A (SANEIGEN FFI KK) 19 July 2007 (2007-07-19)

## Description

The invention relates to food and beverage foams, which are suitable, inter alia, for use in the preparation of foam topped beverages, such as cappuccino-style coffee, and foam toppings on deserts, cocktails and other comestibles.

Cappuccino is a popular form of coffee with a foamed milk head. It requires relatively bulky and expensive equipment to produce the foam, which normally restricts its preparation to commercial establishments. It is unsuitable for consumers with a milk allergy, or those on vegetarian or low fat diets.

Attempts have been made to produce spray-on, aerosol milk-foams, which would not need special equipment and would be suitable for domestic use, but difficulties have been encountered obtaining a product which is acceptable to consumers. Dairy products generally have a limited shelf life and require refrigeration. Non-dairy products are not currently available. There is also a potential demand for flavoured, and in particular alcoholic, foam e.g. as a topping for a variety of foods and beverages, such as cocktails and desserts and as a confection in its own right.

EP0390217 discloses foamed seasoning which is substantially foamed, a foamable seasoning composition liquor comprising an aqueous seasoning and an emulsifier, and the processes thereof.

JP2007181427 discloses a foaming agent and/or foaming stabilizer for drinks made from at least one member selected from the group consisting of soybean polysaccharides, Arabian gum, gellan gum, xanthan gum and Cyamoposis Gum. It is disclosed that fine homogeneous foam can be produced.

We have now discovered that a non-dairy, cappuccino-style coffee can be prepared by spraying a foamed aqueous solution of a food grade surfactant, which has an HLB greater than 9, onto a cup of coffee. We have also discovered that such foams can be used to provide a wide range of other toppings, drinks or confections.

We have further discovered that aqueous alcoholic beverages may be foamed using a food grade surfactant as aforesaid to provide an attractive topping for drinks and foods and that energy drinks may be similarly foamed and sprayed directly into the mouth.

In particular we have found that sugar esters having an HLB greater than 9 provide particularly acceptable foams for food and beverage use, especially when used in conjunction with aqueous alcohol, methylcellulose and/or glycerol.

We have additionally discovered that the solubility of sugar esters in aqueous alcohol is improved by the presence of sugar.

We have discovered that mixtures of surfactants having an HLB in the range 9-12, with surfactants having an HLB greater than 12 provide particularly stable foams.

We have further discovered that non-ionic surfactants such as sugar esters are soluble in concentrated ethanol, e.g. 95% to 97% ethanol such as the neutral spirit, which is commonly used as the basis for drinks such as gin and vodka. These are commonly made by diluting a concentrate, consisting of neutral spirit and any flavourings or other adjuvants, to a final ethanol concentration, which is usually in the range 30 to 40%. We have found that e.g. sugar esters are sufficiently soluble in neutral spirit to provide foamable products on dilution.

Accordingly, in a first aspect the present invention provides, the use of a foam comprising an aqueous ethanolic solution of at least one surfactant which is suitable for food use and which has an HLB above 9, and ethanol in an amount of more than 15% by weight but no more than 40% by weight, as a drink or topping.

In a second aspect the invention also provides, the use of an aqueous alcoholic solution comprising a food grade surfactant, which has an HLB greater than 9, and an ethanol content of more than 15% by weight but no more than 40% by weight, to make a foamed drink or topping.

In the following discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

Compositions above 5Ps do not pass readily through foam heads. The viscosity of a sprayable formulation is preferably less than 4Ps, more preferably less than 3Ps, still more preferably less than 2Ps most preferably less than 1.5Ps. All references to viscosity herein, unless stated to the contrary, are to the viscosity as measured on a Brookfield viscometer at 21s⁻¹.

In order to obtain satisfactory foam in the absence of auxiliary stabilisers, we prefer to use non-ionic surfactants with an HLB greater than 10. More preferably the surfactants have a mean HLB greater than 11, even more preferably greater than 12, still more preferably greater than 13, most preferably greater than 14.5. While higher HLBs could be even more suitable, from the point of view of foaming, in practice we have been unable to identify any commercially available products, which are suitable for food use and which have an HLB substantially higher than 15. Most higher-HLB surfactants are not permitted for food use or have undesirable flavours, which are hard to mask. We prefer that the surfactant has an HLB less than 40, more preferably less than 30, still more preferably less than 20, most preferably less than 16.

Generally, we have found that surfactants having an HLB in the lower part of the range, e.g. 9 to 12, tend to give foams that collapse on standing, decreasing in volume, but retaining their density, while surfactants with HLB above 12 tend to give foams that maintain their volume for extended periods, but undergo drainage, resulting in loss of foam density. Surprisingly, however, mixtures of the higher and lower HLB surfactants combine the resistance to collapse of the former with the resistance to drainage of the latter.

Preferably the surfactant comprises at least 50%, more preferably at least 60%, even more preferably at least 70%, most preferably at least 80% by weight of the lower HLB surfactant and at least 0.5%, more preferably at least 1%, even more preferably at least 2%, most preferably at least 5% by weight of the higher HLB surfactant, all based on the total weight of surfactant.

For example the surfactant may typically comprise fatty acid ethoxylates, ethoxylated glyceryl esters, alkyl or alkenyl sugar esters, e.g. sucrose esters, ethoxylated sorbitan esters, saponins, hydroxylated phospholipids and/or cellulose derivatives. Specific examples include sucrose palmitate or stearate, sucrose oleate, methylcellulose, ethoxylated sorbitan oleate, ethoxylated starch and ethoxylated castor oil.

Of these we have found that ethoxylated sorbitan esters give especially good foam quality, but have a slight bitter taste and are therefore generally only suitable in products having a strong masking flavouring. The surfactants in our solution are therefore preferably substantially free from alkoxy groups. That is to say they contain an average of less than1 alkoxy group, preferably less than 0.5, more preferably less than 0.1, most preferably less than 0.01 alkoxy groups per molecule of surfactant.

Methylcellulose is preferable on flavour grounds but gives a less satisfactory foam quality, when used alone. Typically methyl cellulose has an HLB around 11, and therefore requires a small amount of a higher HLB surfactant to make a fully stable foam.

Sugar esters are particularly preferred on grounds of taste and foam quality, especially in conjunction with alcohol or with lower HLB surfactants, such as methyl cellulose or lecithin. Aqueous sugar esters in the absence of ethanol or a cosurfactant tend to give solutions that are too viscous to pass through a conventional foam head. Suitable esters include octanoates, decanoates, laurates, myristates, palmitates, stearates, behenates, oleates, linoleates, linolenates, erucates and mixtures thereof. Lower molecular weight alkyl esters, such as sucrose laurate, have a slightly soapy taste, but higher mole weight esters, such as stearate and oleate are essentially tasteless. Mixtures comprising the higher homologues with a minor amount of the lower homologues are often preferred for better solubility combined with negligible adverse taste. Sugar esters tend to provide good foams at particularly low concentrations.

The sugar is preferably a mono or, more preferably, disaccharide sugar, most preferably sucrose, but could for example be fructose, maltose, glucose or invert sugar. Other sugars, which could be used, but are unlikely to be commercially attractive, include, for example, mannose, ribose, galactose, lactose, allose, altrose, talose, gulose, idose, arabinose, xylose, lyxose, erythrose, threose, acrose, rhamnose, fucose, glyceraldehyde, stachyose, agavose and cellobiose or a tri- or tetra-saccharide.

Most commercially available sugar esters comprise a mixture of mono- and di-esters. In the case of saturated esters these are not always fully soluble in aqueous or aqueous alcoholic systems at all water/alcohol ratios. Moreover, on standing at low temperatures, sediment sometimes forms, which may block the foam head.

The problem may be avoided by using products comprising essentially the mono ester, or by storing the solution at low temperature, e.g. 5°C for a short period, e.g. three to five days, and separating any sediment by filtration, centrifugation and/or decantation. We have found that, counter-intuitively, turbidity in very dilute sugar ester solutions can often be avoided by increasing the concentration of the ester. We have also found that the addition of a small amount of sugar, e.g. at least about 7% by weight has a similar effect in clearing turbidity of dilute sugar ester solutions.

We particularly prefer to use sucrose oleate, which has been found to dissolve fully in aqueous alcoholic systems at most water/ethanol ratios, to form stable solutions. Commercial sucrose oleate typically comprises mono-oleate with smaller amounts of dioleate and saturated esters.

We prefer a mixture of methylcellulose with sugar esters, wherein the latter comprise a major part of oleate and a minor proportion of a lower mole weight saturated ester, such as laurate. For example the total proportion of sugar ester may be at least 1, preferably at least 5, more preferably at least 10, most preferably at least 15%, but less than 60, more preferably less than 50, still more preferably less than 30, most preferably less than 20% based on the weight of the total surfactant. The proportion of oleate is preferably at least 50, more preferably at least 60% by weight of the total sugar ester. The proportion of lower alkylate is preferably at least 20%, more preferably at least 30% of the total weight of sugar ester.

One disadvantage of sugar esters is their hydrolytic instability in acid systems. This is not a problem in alcoholic systems, in which the alcohol acts as a preservative.

The total concentration of surfactant is preferably greater than 0.03%, more preferably greater than 0.04%, still more preferably greater than 0.1%, most preferably greater than 0.3%, but less than 10%, more preferably less than 5%, still more preferably less than 3%, most preferably less than 1% by weight based on the total weight of the solution. The optimum concentration varies according to the surfactant and can readily be determined for particular cases.

Sugar esters give good foam stability at 0.04%, but not at 0.02%. Most other surfactants need significantly higher concentrations for good foam stability. We prefer to use the minimum consistent with acceptable foam stability. Generally the use of surfactant levels above the minimum carries little, if any, added benefit.

In addition to water and surfactant, the solution may contain ancillary ingredients such as flavourings, sweeteners, foam stabilisers, preservatives, buffers, and/or fragrances.

Sugar is effective as a sweetener, and also to inhibit turbidity in alcoholic sugar ester solutions at low concentrations of sugar ester and alcohol. Sugar is also useful as a foam stabiliser. Sugar concentrations above 50% by weight may give rise to solutions that are too viscous to be readily sprayed through a foam head. Generally we prefer sugar concentrations below 40%, more preferably below 30% by weight. The sugar is preferably sucrose, but may be any of those listed above in relation to the sugar component of the sugar ester.

Ethanol is present in concentrations up to 40%, more preferably up to 37%, still more preferably up to 35%, most preferably up to 30% by weight of the composition. Typically a potable spirit, such as gin, vodka, brandy, whisky, schnapps, rum, a liqueur, a fortified wine or any other fermented, fortified and/or distilled drink may be used as the solvent medium.

Generally it is difficult to obtain satisfactory foam at ethanol concentrations above 37.5% by weight. Difficulties may also be encountered at concentrations between about 5% and 10% by weight. Particularly good results are obtained at concentrations of more than 15% by weight ethanol. If it is desired to foam spirits containing more than 40% by weight ethanol, it is generally preferred to dilute to below 35%, in order to obtain good foam.

Apart from ethanol, other food-acceptable and water-miscible mono and/or polyhydric alcohols and/or alcohol ethers, such as isopropanol may be included, if required to improve homogeneity.

Glycerol has been found to enhance the foaming characteristics, e.g. when present in proportions of more than 0.1%, preferably more than 0.5%, more preferably more than 1% and up to 5%, preferably less than 4%, more preferably less than 3%, most preferably less than 2.5% based on the weight of the composition. In aqueous alcoholic systems, the amount of glycerol is typically high relative to the amount of surfactant, e.g. up to 6:1 by weight, preferably up to 5:1. For surfactant systems having a relatively low mean HLB, e.g. below 12, we prefer to include a foam stabiliser, such as propylene glycol alginate, trisodium citrate or xanthan gum in an effective proportion, e.g. at least 0.001, preferably more than 0.005, most preferably more than 0.01% by weight, based on the weight of the composition, but less than 2%, preferably less than 1%, more preferably less than 0.5%, most preferably less than 0.1%.

The compositions may require the presence of a preservative, such as sodium benzoate and potassium sorbate. Where a sorbate/benzoate preservative is used we prefer that the pH of the system be adjusted to an acid value, below 7, preferably below 6, more preferably below 5, most preferably below 4.5. Preferably the pH is above 2, more preferably above 3, most preferably above 3.5. The pH of the solution may be adjusted, e.g. with citric acid.

Some surfactants, e.g. sorbitan esters or sucrose laurate have a taste, which may be masked by the presence of strong flavourings, such as, for example, vanilla, lemon orange, lime, chocolate or ginger. Sucrose oleate, saponins and methyl cellulose are, however, tasteless at the optimum concentration.

The solution may be foamed by dispensing through a foam generator comprising a mixing chamber in which the liquid is mixed with air, steam or an inert gas. For example the solution may be packed in a bottle provided with a foam head and means for pumping the liquid and atmospheric air simultaneously through the foam head.

Conveniently the bottle may be a squeeze bottle and the pumping action may be effected by squeezing the bottle. Alternatively the solution may be packed in an aerosol foam dispenser, or in a dispenser of the type in which the foam is delivered through a nozzle, which activates a pump when depressed. Suitable dispensers are widely used in the personal care industry e.g. for body washes, shaving foams and the like. One such dispenser is sold commercially under the registered trade mark "REXAM EZI FOAMER".

It is also possible to form the foam by agitating the solution in air, e.g. using a mechanical stirrer or whisk. This method is applicable to foaming solutions that are too viscous to pass through a conventional foam head. When liquids are added to foams formed in this way, the foam forms a layer above the liquid.

Products according to the invention may be used as toppings for cappuccino-style coffee, or to provide a foam head on any type of drink, such as, for example, hot chocolate or milk shakes or on deserts, or as a flavoured confection in their own right. Alcoholic foams may be served as such, or used to provide a topping for beer, cocktails, ice cream, syllabubs, sundaes and the like.

Concentrates may contain surfactant in concentrations adapted to provide foamable products of the invention when the concentrate is diluted with water, e.g. to alcohol levels in the range 15 to 35% by weight. The concentrate may additionally contain other ingredients required in the final beverage, such as juniper extract and other flavours for gin.

The invention is illustrated by the following examples in which all proportions are % by weight based on the total weight of the composition unless stated to the contrary. Unless stated to the contrary, references to sucrose oleate refer to total solids derived from "OWA-1570", which is sold by Ryoto Ester SP, and which consists of 21% sucrose monooleate, 7% sucrose dioleate, 12% other sucrose alkylates, 4% ethanol and 56% water. References to saponin, unless stated to the contrary, are to total saponin solids derived from "QUILLAJA LIQUID ULTRA 661F/PL", supplied by Guinness Products, and having an HLB > 13

### EXAMPLE I (comparative)

### Cappuccino

The solution set out in Table I was packed in a squeeze bottle provided with a "REXAM EZI FOAMER"O foam spray head. 5g of the solution was sprayed onto a cup of freshly prepared instant coffee. It formed 50ml of a pleasant tasting, creamy, cappuccino-like foam head on the coffee. After 20 minutes the surface of the coffee was still completely covered by 25ml of foam.

**TABLE I**

| | |
|---|---|
| Sucrose laurate | 0.4 |
| Glycerol | 0.2 |
| Vanilla flavour | 3.0 |
| Propylene giycoi aiginate | 0.01 |
| Potassium sorbate | 0.2 |
| Sodium benzoate | 0.2 |
| Citric acid | 0.2 |
| Sodium saccharin | 0.01 |
| Water | balance |

### EXAMPLE II (comparative)

The composition of Table II was sprayed through a "REXAM M3 Minifoamer"® filling a half pint glass (36g of solution). A good creamy foam was obtained, which was capable of supporting particles of chocolate. No reduction in volume was observed over a period of 30 minutes, but the foam density reduced. There was no detectable bitterness.

**TABLE II**

| | |
|---|---|
| Methyl cellulose food grade. | 0.5 |
| Sucrose Oleate | 0.06 |
| Sucrose Laurate | 0.03 |
| Potassium Sorbate | 0.08 |
| Sodium Benzoate | 0.08 |
| Flavouring | 0.25 |
| Demineralised Water | 98.97 |

### EXAMPLE III (comparative)

The composition of Table III was sprayed through a "REXAM M3 Minifoamer"® filling a half pint glass (36g of solution). A good creamy foam was obtained, which was capable of supporting particles of chocolate No reduction in volume was observed over a period of 30 minutes, but the foam density reduced. There was no detectable bitterness.

**TABLE III**

| | |
|---|---|
| Methyl cellulose (food grade) | 0.5 |
| Saponin | 0.01 |
| Liquid chocolate flavour | 0.3 |
| Potassium sorbate | 0.8 |
| Sodium benzoate | 0.8 |
| Citric acid | 0.8 |
| Sodium saccharine | 0.035 |
| Water | balance |

### EXAMPLE IV

### Foaming_cherry vodka:

100g vodka (37.5% by volume alcohol); 2g sucrose palmitate/stearate (HLB 16.0, 75% monoester); 1g natural red food colouring (propylene glycol + carmine); and 2g cherry flavouring were stirred vigorously at room temperature for 15 minutes and centrifuged at 6000G for 15 minutes to spin out residual solids (solids will block foamer nozzle).

The composition was a clear red, with a viscosity of 10cps measured at 21s⁻¹ and 20°C.

On standing in a cold incubator for five days a precipitate formed, which is believed to consist mainly of sucrose diester. Filtration removed the diester, leaving a stable product, which was decanted into a "REXAM" M3 mini foamer.

When dispensed through the M3 into a half pint glass a dense soft pale pink foam was obtained which slowly collapsed over ca. 20 minutes to leave 25ml of cherry flavoured vodka. The sucrose ester did not impart any bitterness.

### EXAMPLE V

### Foaming Scotch whisky:

100g Scotch whisky (40% by volume alcohol) and 0.8g sucrose oleate were stirred together for three minutes. The oleate dissolved fully in the whisky to form a clear, stable solution. On dispensing through a "REXAM" M3 mini foamer, a quantity equivalent to a single measure provided half a pint of dense whisky flavoured foam.

### EXAMPLE VI

The appearance of aqueous ethanol solutions containing 0.4% sucrose oleate with 2.0% glycerol and their behaviour after spraying through a foam head, were determined for a range of ethanol concentrations, as set out in table IV:

**TABLE IV**

| % Ethanol | Foam duration (minutes) | Appearance |
|---|---|---|
| 5 | -- | Turbid, viscous solution |
| 10 | > 15 | Hazy, thin solution |
| 15 | > 15 | Clear, thin solution |
| 20 | >15 | Clear, thin solution |
| 35 | >15 | Clear, thin solution |
| 37.5 | 10 | Slightly hazy thin solution |
| 40 | 3 | Hazy, thin solution |
| 45 | <1 | Turbid, thin solution |
| 50 | <1 | Turbid, thin solution |
| 55 | <1 | Hazy, thin solution |
| 60 | <<1 | Clear, thin solution |

On the basis of the above results the whisky used in Example V was diluted with water to 33% by weight alcohol. Then 0.4% sucrose oleate and 2.0% glycerol were added. A substantially superior foam was obtained that persisted for over 45 minutes.

### EXAMPLE VII

Sucrose oleate was dissolved at various concentrations between 0.02 and 0.4% in 20%, 25%, 30% and 35% ethanol solutions. Samples were stored at 3°C and at room temperature. Certain of the solutions were turbid, due to the presence of small crystalline particles which separate out on standing. The results were recorded in the following Table V, in which "S" indicates a clear solution, "H" a slightly hazy solution and "T" a turbid solution.

**TABLE V**

| %EtOH | 20 | 20 | 25 | 25 | 30 | 30 | 35 | 35 |
|---|---|---|---|---|---|---|---|---|
| % sucrose ester | 3°C | R/T | 3°C | R/T | 3°C | R/T | 3°C | R/T |
| 0.4 | T | S | T | S | S | S | S | S |
| 0.2 | T | S | T | S | S | S | S | S |
| 0.1 | T | S | T | S | H | S | H | T |
| 0.04 | T | S | T | S | T | H | T | T |
| 0.02 | T | S | T | S | T | T | T | T |

Addition of sucrose in quantities between 7 and 40% rendered the turbid solutions clear. At 25% ethanol, raising the ester concentration to 0.8% or 1.6% also gave clear solutions.

### EXAMPLE VIII

The whisky product of example VI was foamed by whisking with a milk foamer. On addition of hot coffee a stable head of foam formed above the liquid.

## Claims

1. The use of a foam comprising an aqueous ethanolic solution of at least one surfactant which is suitable for food use and which has an HLB above 9, and ethanol in an amount of more than 15 % by weight but no more than 40 % by weight, as a drink or topping.

2. The use of an aqueous alcoholic solution comprising a food grade surfactant, which has an HLB greater than 9, and an ethanol content of more than 15 % by weight but no more than 40 % by weight, to make a foamed drink or topping.

3. The use according to any preceding claim, wherein the aqueous ethanolic solution comprises no more than 30 % by weight of ethanol.

4. The use according to any preceding claim wherein the total concentration of surfactant is greater than 0.04 %.

5. The use according to any preceding claim wherein the surfactant is a sugar ester.

6. The use according to claim 5 wherein the surfactant is a sucrose ester.

7. The use according to claim 2 wherein the drink is foam-topped.

## Patentansprüche

1. Die Verwendung eines Schaums, der eine wässrige, ethanolische Lösung von zumindest einem Tensid, das sich zur Verwendung bei Lebensmitteln eignet und das einen HLB über 9 hat, und Ethanol in einer Menge von mehr als 15 Gewichtsprozent, jedoch nicht mehr als 40 Gewichtsprozent umfasst, als Getränk oder Garnierung.

2. Die Verwendung einer wässrigen, alkoholischen Lösung, die eine Tensid von Lebensmittelgüte, das einen HLB über 9 hat, und Ethanol in einer Menge von mehr als 15 Gewichtsprozent, jedoch nicht mehr als 40 Gewichtsprozent umfasst, um ein Schaumgetränk oder eine Garnierung zu erstellen.

3. Die Verwendung entsprechend einem der vorhergehenden Ansprüche, wobei die wässrige, ethanolische Lösung nicht mehr als 30 Gewichtsprozent Ethanol umfasst.

4. Die Verwendung entsprechend einem der vorhergehenden Ansprüche, wobei die Gesamtkonzentration des Tensids nicht höher als 0,04% ist.

5. Die Verwendung entsprechend einem der vorhergehenden Ansprüche, wobei das Tensid ein Zuckerester ist.

6. Die Verwendung entsprechend Anspruch 5, wobei das Tensid ein Sukroseester ist.

7. Die Verwendung entsprechend Anspruch 2, wobei das Getränk eine Schaumhaube hat.

## Revendications

1. L'utilisation d'une mousse contenant une solution éthanolique aqueuse d'au moins un tensioactif qui convient à une utilisation alimentaire et qui possède un HLB supérieur à 9, et de l'éthanol dans une quantité supérieure à 15% en poids mais non supérieure à 40% en poids, sous la forme d'une boisson ou d'un nappage.

2. L'utilisation d'une solution alcoolique aqueuse contenant un tensioactif de qualité alimentaire, qui possède un HLB supérieur à 9, et une teneur en éthanol supérieure à 15% en poids mais non supérieure à 40% en poids, destinée à la fabrication d'une boisson ou d'un nappage mousseux.

3. L'utilisation selon l'une quelconque des Revendications précédentes, où la solution éthanolique aqueuse ne contient pas plus de 30% en poids d'éthanol.

4. L'utilisation selon l'une quelconque des Revendications précédentes où la concentration totale de tensioactif est supérieure à 0,04%.

5. L'utilisation selon l'une quelconque des Revendications précédentes où le tensioactif est un ester de sucre.

6. L'utilisation selon la Revendication 5 où le tensioactif est un ester de saccharose.

7. L'utilisation selon la Revendication 2 où la boisson comprend un nappage mousseux.
